# EUROPÄISCHE PATENTSCHRIFT

(11) **EP 3 536 822 B1**
(45) Veröffentlichungstag und Bekanntmachung des Hinweises auf die Patenterteilung: **15.02.2023**
(21) Anmeldenummer: 18160784.7
(22) Anmeldetag: 08.03.2018
(51) Int. Cl.: C23C 24/08, B23K 28/02, B23P 25/00, B22F 7/02

(54) **VERFAHREN ZUR HERSTELLUNG EINES WERKSTOFFVERBUNDES**
METHOD FOR PRODUCING A COMPOSITE
PROCÉDÉ DE FABRICATION D'UN MATÉRIAU COMPOSITE

(43) Veröffentlichungstag der Anmeldung: 11.09.2019
(73) Patentinhaber: Hermle Maschinenbau GmbH, 85521 Ottobrunn (DE)
(72) Erfinder: DERNTL, Rudolf, 4222 Langenstein (AT); FRETSCHNER, Daniel, 81825 München (DE); MÜLLER, Oliver, 82024 Taufkirchen (DE); STÜRZER, Robert, 85567 Bruck (DE); SCHOLZ, Peter, 81539 München (DE); SCHMALISCH, Bianca, 85626 Glonn (DE)
(74) Vertreter: Hoefer & Partner Patentanwälte mbB

(56) Entgegenhaltungen:
- WO-A1-2014/116254
- DE-A1- 10 131 657
- DE-A1-102012 000 846

## Beschreibung

Die Erfindung betrifft ein Verfahren zur Herstellung eines Werkstoffverbundes, das Schwachstellen im Werkstoffverbund aufgrund unterschiedlicher Ausdehnungskoeffizienten der verwendeten Werkstoffe reduziert.

Das Herstellen eines Werkstoffverbundes zwischen Werkstoffen mit unterschiedlichen Ausdehnungskoeffizienten unter Anwendung von erhöhten Temperaturen bedingt oftmals beim Erwärmen der zu verbindenden Werkstoffe thermische Spannungen, die zu Rissbildungen in dem oder den Werkstoffen führen können. Insbesondere wird die Rissbildung dabei in dem Werkstoff erzeugt, der einen niedrigeren thermischen Ausdehnungskoeffizient hat. Alternativ oder additiv dazu kann die Rissbildung auch in der Nahtstelle der beiden Werkstoffe entstehen. Dabei sind Werkstoffverbindungen aus Werkstoffen mit unterschiedlichen Ausdehnungskoeffizienten wünschenswert, da durch die unterschiedlichen Werkstoffe auch jeweils unterschiedliche Eigenschaften in den Werkstoffverbund eingebracht werden können. Bei einer Verbindungsbildung von beispielsweise Kupfer und Stahl kann somit die hohe thermische Leitfähigkeit des Kupfers mit der sehr guten Verschleißbeständigkeit des Stahls kombiniert werden. Zum Verbinden von Werkstoffen mit unterschiedlichen Ausdehnungskoeffizienten, wie zum Beispiel eben Stahl und Kupfer, wird gemäß WO 00/50209 A1 vorgeschlagen, zwischen den Stahl und das Kupfer eine Nickelschicht einzubringen, die sowohl mit dem Stahl als auch mit dem Kupfer eine Verbindungsbildung eingeht. Nachteilig hieran ist, dass somit ein weiterer Werkstoff zur Verbindungsbildung erforderlich ist und thermische Spannungen dennoch nicht ausreichend verhindert werden können.

DE 101 31 657 A1 offenbart ein Verfahren und eine Vorrichtung zur direkten Herstellung von Freiform-Werkzeugen mit Rapid Prototyping aus einem Computermodell. Die Verfahrensschritte umfassen im Wesentlichen (a) Bearbeiten einer weichen Metall-Werkzeugbasis, um mindestens eine Freiform-Oberfläche entsprechend dem Computermodell zu konturieren; (b) dynamisches Kaltgasspritzen der konturierten Oberfläche, um überlagerte stoßgeschweißte Metallpartikelschichten zu bilden; wobei die Schichten aus mindestens einer thermischen Managementunterschicht im Wesentlichen aus Kupfer und mindestens einer äußeren abriebresistenten Schicht, im Wesentlichen aus Werkzeugstahl, bestehen.

WO 2014/116254 A1 offenbart ein Herstellungsverfahren zur Herstellung von funktionalen graduierten Komponenten, das Kaltgasspritzen eines Kernmaterials und Kaltgasspritzen eines Sets aus Zähnen um das Kernmaterial umfasst, die aus einem anderen Material gebildet sind.

Es ist somit eine Aufgabe der Erfindung ein Verfahren zur Herstellung eines Werkstoffverbundes aus mindestens einem ersten Werkstoff und einem zweiten Werkstoff, wobei der erste Werkstoff einen höheren thermischen Ausdehnungskoeffizient aufweist als der zweite Werkstoff, anzugeben, das Zugspannungen im Werkstoffverbund reduziert bzw. vermeidet.

Die Lösung dieser Aufgaben erfolgt durch die Merkmale des unabhängigen Anspruchs. Die abhängigen Ansprüche beinhalten vorteilhafte Weiterbildungen und Ausgestaltungen der Erfindung.

Die Aufgabe wird somit durch ein Verfahren zur Herstellung eines Werkstoffverbundes aus mindestens einem ersten Werkstoff und einem zweiten Werkstoff, wobei der erste Werkstoff einen höheren thermischen Ausdehnungskoeffizient aufweist als der zweite Werkstoff, gelöst, das nachfolgende Schritte umfasst. Hierbei wird, sofern nichts Anderweitiges angegeben ist, unter dem thermischen Ausdehnungskoeffizient der volumenspezifische Ausdehnungskoeffizient verstanden, der angibt, um welchen Betrag im Verhältnis zum gesamten Volumen sich das Volumen eines Körpers bei einer Temperaturänderung von einem Kelvin vergrößert oder verkleinert.

In einem ersten Verfahrensschritt wird der erste Werkstoff unter Volumenausdehnung des ersten Werkstoffs auf eine Temperatur aufgeheizt, die der im gesamten Verfahren anzuwendenden Maximaltemperatur entspricht. Dies bedeutet mit anderen Worten, dass in etwaigen, dem Aufheizen des ersten Werkstoffs vorausgehenden und auch nachfolgenden Temperaturbehandlungen, diese Temperatur, nämlich die zum Aufheizen des ersten Werkstoffs unter Volumenausdehnung desselben angewendete Temperatur, nicht überschritten wird.

Hat der erste Werkstoff diese Temperatur erreicht, erfolgt eine spanabhebende Behandlung desselben, nämlich ein Abtragen, insbesondere Abfräsen, des ersten Werkstoffs auf die gewünschte Bauteilgeometrie. Unter der gewünschten Bauteilgeometrie werden diejenigen Abmessungen des ersten Werkstoffs verstanden, die den gewünschten Endmaßen des ersten Werkstoffs im herzustellenden Werkstoffverbund entsprechen. Insbesondere wird das bei der thermischen Volumenausdehnung zugenommene Volumen abgetragen, so dass bei einem sich anschließenden Abkühlvorgang bzw. einem weiteren Erwärmen bei einer Temperatur, die maximal der im Verfahren anzuwendenden Maximaltemperatur entspricht, keine weitere Volumenvergrößerung auftreten kann.

Im Anschluss daran erfolgt das Verbinden des zweiten Werkstoffs mit dem auf die gewünschte Bauteilgeometrie abgetragenen ersten Werkstoff. Das Verbinden des ersten Werkstoffs und des zweiten Werkstoffs erfolgt dabei in der Art, dass kein weiterer Werkstoff an der Verbindungsbildung teilhat. Es wird eine direkte stoffliche, also stoffschlüssige und vorzugsweise auch formschlüssige Verbindung zwischen dem ersten Werkstoff und dem zweiten Werkstoff initiiert. Dies kann im einfachsten Fall durch Auftragen des zweiten Werkstoffs auf den ersten Werkstoff ausgeführt werden.

Dadurch dass der erste Werkstoff bei einer Temperatur, die der im Verfahren anzuwendenden Maximaltemperatur entspricht, ausgeheizt und anschließend auf die gewünschte Bauteilgeometrie abgetragen wird, kann durch die Verbindung mit dem zweiten Werkstoff lediglich eine Volumenabnahme, jedoch keine weitere Volumenzunahme erfolgen, auch nicht, wenn der erste Werkstoff, beispielsweise zum Aufbringen des zweiten Werkstoffs erneut auf maximal die Maximaltemperatur aufgeheizt wird. Eine Folge dieser Verfahrensführung ist, dass somit in den Verbindungsbereich des ersten Werkstoffs und des zweiten Werkstoffs keine Zugspannungen eingebracht werden, so dass eine Rissbildung, z.B. im zweiten Werkstoff, aufgrund dieser Zugspannungen effizient verhindert wird. Die Verfahrensführung hat ferner zur Folge, dass beim Abkühlen allenfalls eine Volumenreduzierung induziert wird, die jedoch zu keinen rissbildenden Zugspannungen im zweiten Werkstoff führt. Es wird somit durch das erfindungsgemäße Verfahren ohne hohen technischen Aufwand ein dauerhaft stabiler zugspannungsreduzierter Werkstoffverbund zwischen mindestens zwei Werkstoffen erzielt. Hierbei wird zudem angeführt, dass sofern mehrere Werkstoffe mit unterschiedlichen Ausdehnungskoeffizienten gemäß dem erfindungsgemäßen Verfahren verbunden werden sollen, die jeweilige Verbindungsbildung zwischen den Werkstoffen jeweils so erfolgt, dass immer derjenige Werkstoff mit dem höheren Ausdehnungskoeffizient auf eine Temperatur aufgeheizt wird, die der im Verfahren anzuwendenden Maximaltemperatur entspricht, und er danach abgetragen wird, bevor er mit dem weiteren Werkstoff verbunden wird. Diese Verfahrensschritte können so oft wie nötig wiederholt werden.

Eine vorteilhafte Weiterbildung sieht vor, dass der erste Werkstoff vor dem Aufheizen des ersten Werkstoffs auf ein Substrat aufgebracht wird. Hierdurch kann zum einen der Werkstoffverbund einfacher in ein Bauteil integriert werden. Zum anderen kann dadurch aber auch die Volumenausdehnung des ersten Werkstoffs begrenzt werden, so dass ein Abtragen des ersten Werkstoffs nicht allseitig erfolgen muss, sondern insbesondere nur an freiliegenden, vom Substrat nicht bedeckten Flächen des ersten Werkstoffs.

Als besonders geeignet hat sich als Verfahren zum Bereitstellen des ersten Werkstoffs ein (thermischer) Spritzprozess herausgestellt, da hierdurch eine sehr präzise Geometrie des ersten Werkstoffs herstellbar ist. Insbesondere vorteilhaft ist hierunter das Kaltgasspritzen.

Weiter vorteilhaft wird das Substrat vor dem Aufspritzen des ersten Werkstoffs auf eine Temperatur unterhalb der Temperatur, die der im Verfahren anzuwendenden Maximaltemperatur entspricht, aufgeheizt. Dies verbessert ein Anhaften des ersten Werkstoffs auf dem Substrat und verhindert, dass sich etwaige im Prozess entstehende Luftfeuchtigkeit auf dem ersten Werkstoff und/oder auf dem Substrat niederschlägt, was wiederum einem Anhaften des ersten Werkstoffs auf dem Substrat zuträglich ist. Durch eine Vortemperierung des Substrats kann auch die thermische Volumenausdehnung des aufzubringenden ersten Werkstoffs einfacher gesteuert werden.

Besonders vorteilhaft wird auch das Verbinden des zweiten Werkstoffs mit dem ersten Werkstoff durch Aufbringen des zweiten Werkstoffs auf den ersten Werkstoff mittels eines (thermischen) Spritzprozesses, und hierunter insbesondere mittels Kaltgasspritzen, ausgeführt. Der Vorteil dieser Verfahrensführung liegt in einer energiesparenden Applikationsmöglichkeit des zweiten Werkstoffs. Weiterhin können durch einen derartigen Spritzprozess auf Mikroebene formschlüssige Verbindungen zwischen dem ersten Werkstoff und dem zweiten Werkstoff gebildet werden, was der Ausbildung eines stabilen Werkstoffverbunds ebenfalls zuträglich ist.

Alternativ zu einem (thermischen) Spritzprozess kann der erste Werkstoff auch in Form eines Einlegeteils bereitgestellt werden. Das Einlegeteil wird dann in eine Aussparung im zweiten Werkstoff eingebracht. Dies hat den Vorteil, dass der erste Werkstoff sehr kostengünstig und im Batchverfahren hergestellt werden kann. Das Einlegeteil kann dabei vor dem Abtragen des ersten Werkstoffs oder nach dem Abtragen des ersten Werkstoffs in die Aussparung im zweiten Werkstoff eingebracht werden. Das Vorsehen des ersten Werkstoffs in Form eines Einlegeteils hat sich insbesondere für kleinteilige Einlegeteile als vorteilhaft erwiesen, da hier im Vergleich zu einem Spritzprozess, der zum Übersprühen (so genannter "Overspray-Effekt") der Aussparung mit überschüssigem ersten Werkstoff führt, Material an erstem Werkstoff effizient eingespart werden kann.

Vorteilhaft ist es hierbei, wenn der in Form eines Einlegeteils vorliegende erste Werkstoff vor dem Aufheizen in die Aussparung im zweiten Werkstoff eingebracht wird, da somit der erste Werkstoff im Hinblick auf seine thermische Volumenausdehnung durch die den ersten Werkstoff umgebende Aussparung räumlich begrenzt wird. Der erste Werkstoff kann sich also lediglich in diejenigen Richtungen ausdehnen, die nicht von der Aussparung umgeben sind. Dies kann auch ein vorgesehenes Abtragen des ersten Werkstoffs erleichtern und verbessert in jedem Fall die Verbindungsbildung zwischen dem ersten Werkstoff und dem zweiten Werkstoff. Der erste Werkstoff kann beispielsweise in Form eines Quaders vorliegen, und dieser Quader kann in eine entsprechende quaderförmige Aussparung im zweiten Werkstoff eingebracht werden, so dass lediglich seine Oberfläche in der Aussparung freiliegt. Bei Volumenausdehnung des ersten Werkstoffs kann sich der erste Werkstoff lediglich in Richtung der freiliegenden Oberfläche ausdehnen, da alle anderen Seiten räumlich durch die Aussparung begrenzt sind. Der nun aus der Aussparung hervorstehende Abschnitt des ersten Werkstoffs wird abgetragen, sobald der erste Werkstoff auf die Temperatur aufgeheizt ist, die der im Verfahren anzuwendenden Maximaltemperatur entspricht. Somit kann der erste Werkstoff bei einer weiteren Temperaturbehandlung bei einer Temperatur, die maximal der im Verfahren anzuwendenden Maximaltemperatur entspricht, nicht mehr über die Aussparung "hinauswachsen".

Um eine stabile Verbindungsbildung zwischen dem ersten Werkstoff und dem zweiten Werkstoff zu fördern, kann weiter vorteilhaft vorgesehen sein, dass der in Form eines Einlegeteils vorliegende erste Werkstoff unter Bildung einer formschlüssigen Verbindung in die Aussparung im zweiten Werkstoff eingebracht wird.

Eine stabile Verbindungsbildung zwischen dem ersten Werkstoff und dem zweiten Werkstoff lässt sich alternativ oder additiv auch dadurch erzielen, dass der in Form eines Einlegeteils vorliegende erste Werkstoff in die Aussparung im zweiten Werkstoff eingeschraubt oder mittels einer Verdrehsicherung in der Aussparung im zweiten Werkstoff arretiert wird. Geeignete Befestigungsmechanismen lassen sich auch beliebig kombinieren, sofern eine stoffschlüssige und/oder formschlüssige Verbindung zwischen dem ersten Werkstoff und dem zweiten Werkstoff weiterhin möglich ist.

Gemäß einer weiteren vorteilhaften Weiterbildung wird der erste Werkstoff mittels eines (thermischen) Spritzprozesses, und hierbei insbesondere mittels Kaltgasspritzen, in eine Aussparung im zweiten Werkstoff eingebracht. Der Vorteil dieser Verfahrensführung liegt in einer energiesparenden Applikationsmöglichkeit des ersten Werkstoffs. Weiterhin können, wie vorstehend bereits erläutert, durch einen derartigen Spritzprozess auf Mikroebene formschlüssige Verbindungen zwischen dem ersten Werkstoff und dem zweiten Werkstoff gebildet werden, was der Ausbildung eines stabilen Werkstoffverbunds ebenfalls zuträglich ist.

Durch die vorteilhafte Weiterbildung, in der nach dem Aufheizen des ersten Werkstoffs ein aus der Aussparung herausstehender bzw. ein von der Aussparung hervorstehender Abschnitt des ersten Werkstoffs abgetragen wird, kann ein Werkstoffverbund erhalten werden, bei dem der erste Werkstoff so in den zweiten Werkstoff integriert ist, dass sich eine planare Oberfläche zwischen dem in der Aussparung angeordneten ersten Werkstoff und dem den ersten Werkstoff umgebenden zweiten Werkstoff ergibt.

Eine Bauteilgeometrie, in der ein Werkstoff von einem weiteren Werkstoff insbesondere allseitig umgeben ist, kann für manche Anwendungen von Vorteil sein. Dies ist dann sehr einfach realisierbar, wenn das vorstehend dargelegte Verfahren als weiteren Schritt einen Schritt des Verbindens mindestens eines Bereichs des abgetragenen ersten Werkstoffs, also eines Bereichs, in dem der erste Werkstoff abgetragen wurde, mit weiterem zweitem Werkstoff umfasst. Mit anderen Worten wird der in der Aussparung angeordnete erste Werkstoff, der durch Temperatureinwirkung eine Volumenausdehnung erfahren hat, so dass er aus der Aussparung heraussteht, und sodann entsprechend abgetragen wurde, so dass sich eine planare Oberfläche zwischen dem in der Aussparung angeordneten ersten Werkstoff und dem umliegenden zweiten Werkstoff ergibt, mit weiterem zweitem Werkstoff mindestens teilweise bzw. abschnittsweise abgedeckt. Aufgrund der Temperaturführung während des Verfahrens kann sich der erste Werkstoff in der Aussparung nicht weiter ausdehnen, so dass die den ersten Werkstoff bedeckende Schicht des zweiten Werkstoffs den ersten Werkstoff und ggf. auch weitere Bereiche des umliegenden ersten Werkstoffs dauerhaft stabil bedecken kann.

Alternativ zu weiterem zweitem Werkstoff kann der Bereich des abgetragenen ersten Werkstoffs, also der Bereich, in dem der erste Werkstoff abgetragen wurde, auch mit einem dritten Werkstoff verbunden werden. Der dritte Werkstoff weist dabei einen thermischen Ausdehnungskoeffizient auf, der niedriger ist als der thermische Ausdehnungskoeffizient des ersten Werkstoffs. Auch in diesem Fall wird unter dem thermischen Ausdehnungskoeffizient wiederum der volumentechnische Ausdehnungskoeffizient verstanden.

Aufgrund der sehr guten Werkstoffeigenschaften wird als erster Werkstoff vorzugsweise Kupfer und als zweiter Werkstoff vorzugsweise Stahl verwendet. Das Kupfer zeichnet sich hierbei durch eine sehr gute thermische Leitfähigkeit und einen höheren thermischen Ausdehnungskoeffizient (16,5⁻⁶/K) als Stahl (11,9⁻⁶/K) aus, wobei der Stahl eine sehr hohe Verschleißbeständigkeit aufweist.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: ein Diagramm veranschaulichend ein Verfahren gemäß einer ersten Ausführungsform der Erfindung und
- Fig. 2: ein Verfahrensschema veranschaulichend ein Verfahren gemäß einer zweiten Ausführungsform der Erfindung.

In den Figuren sind nur die wesentlichen Merkmale der vorliegenden Erfindung dargestellt. Alle übrigen Merkmale sind der Übersichtlichkeit halber weggelassen.

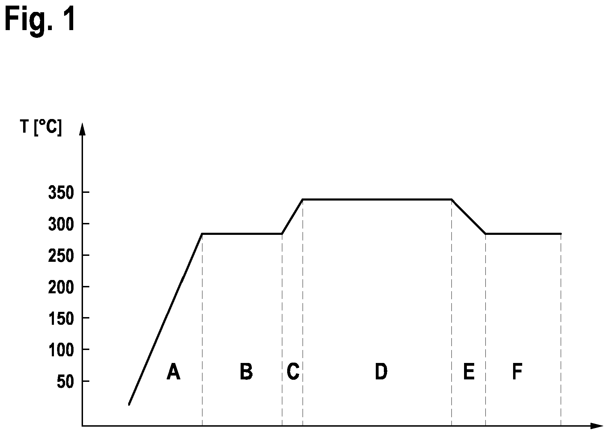

Figur 1 ist ein Diagramm, das ein Verfahren zur Herstellung eines Werkstoffverbundes aus mindestens einem ersten Werkstoff und einem zweiten Werkstoff gemäß einer ersten Ausführungsform der Erfindung veranschaulicht, wobei der erste Werkstoff einen höheren volumentechnischen thermischen Ausdehnungskoeffizient aufweist als der zweite Werkstoff. Das Verfahren ist in sechs Abschnitt A, B, C, D, E und F unterteilt. Auf der Y-Achse ist die Temperatur in °C aufgetragen.

In Abschnitt A erfolgt das Aufheizen eines Substrats. Das Substrat wird auf ca. eine Temperatur von 270 °C aufgeheizt. Das Substrat ist aus einem inerten Werkstoff, wie beispielsweise Stahl, gebildet und dient dazu, dem ersten Werkstoff einen Haftgrund zu bieten. Das Substrat wird dabei auf eine Temperatur unterhalb der im Verfahren anzuwendenden Maximaltemperatur aufgeheizt.

In Abschnitt B erfolgt ein Aufspritzen des ersten Werkstoffs, der in dieser Ausführungsform beispielhaft Kupfer ist, auf das aufgeheizte Substrat. Das Aufspritzen wird vorteilhafterweise mittels Kaltgasspritzen ausgeführt. So werden zwischen dem ersten Werkstoff und dem Substrat auf Mikroebene formschlüssige Verbindungen gebildet, die ein Anhaften des ersten Werkstoffs an dem Substrat begünstigen. Etwaige Reaktionsbedingungen und Parameter sind beispielhaft in DE102007017752 A1 genannt.

In Abschnitt C werden das Substrat und der darauf applizierte erste Werkstoff auf eine Temperatur aufgeheizt, die der im Verfahren anzuwendenden Maximaltemperatur entspricht. Im vorliegenden Beispiel ist das in etwa eine Temperatur von 340 °C.

Bei dieser Temperatur (340 °C) erfolgt sodann in Abschnitt D ein Abtragen des ersten Werkstoffs auf die gewünschte Bauteilgeometrie durch Abfräsen. Das Abfräsen ist ein spanabhebendes Verfahren und kann beispielsweise unter Anwendung herkömmlicher Fräsmaschinen ausgeführt werden. Unter der gewünschten Bauteilgeometrie werden diejenigen Abmessungen des ersten Werkstoffs verstanden, die den gewünschten Endmaßen des ersten Werkstoffs im herzustellenden Werkstoffverbund entsprechen.

In Abschnitt E wird der erste Werkstoff mit einem zweiten Werkstoff (hier im Beispiel: Stahl) mittels Kaltgasspritzen überspritzt, und zwar an mindestens einer abgefrästen Seite des ersten Werkstoffs. Hierbei kann sich die Temperatur etwas absenken, beispielsweise auf 270 °C. Durch das Aufspritzen des zweiten Werkstoffs auf einen oder mehrere abgefräste Bereiche des ersten Werkstoffs, wird eine Verbindung zwischen dem ersten Werkstoff und dem zweiten Werkstoff gebildet, insbesondere durch Ausbildung von formschlüssigen Verbindungen auf Mikroebene zwischen den Werkstoffen. Diese Verbindungsbildung zeichnet sich somit durch eine hohe Stabilität aus. Die hohe Stabilität ist darauf zurückzuführen, dass sich im zweiten Werkstoff, der einen geringeren Ausdehnungskoeffizient als der erste Werkstoff aufweist, und auch in der Naht der beiden verbundenen Werkstoffe, keine Rissbildung zeigt, da durch die Temperaturführung während des Verfahrens, und insbesondere während des Abtragens des ersten Werkstoffs und dem anschließenden Verbindungsvorgang des ersten Werkstoffs und des zweiten Werkstoffs, keine Zugspannung im Verbindungsbereich auftritt. Der erste Werkstoff hat bei Verbindungsbildung mit dem zweiten Werkstoff ein spezifisches thermisches Ausdehnungsvolumen erreicht. Da während des Verfahrens keine weitere Temperaturbehandlung erfolgt, bei der eine Temperatur erreicht wird, die über die im Verfahren anzuwendende Maximaltemperatur hinausgeht, erfolgt auch keine weitere Volumenzunahme des ersten Werkstoffs, die ursächlich für eine Rissbildung im zweiten Werkstoff wäre.

Die Temperatur pendelt sich während des Kaltgasspritzens des zweiten Werkstoffs (Abschnitt F) auf einen nahezu konstanten Wert von 270 °C ein, bis das Ende der Applikation des zweiten Werkstoffs erreicht wird.

Das Verfahren zeichnet sich durch eine einfach steuerbare Verfahrensführung aus und ist daher kostengünstig und technisch einfach umsetzbar. Es wird ein dauerhaft stabiler Werkstoffverbund zwischen zwei Werkstoffen mit unterschiedlichen thermischen Volumenausdehnungskoeffizienten ohne Rissbildungsneigung erzielt.

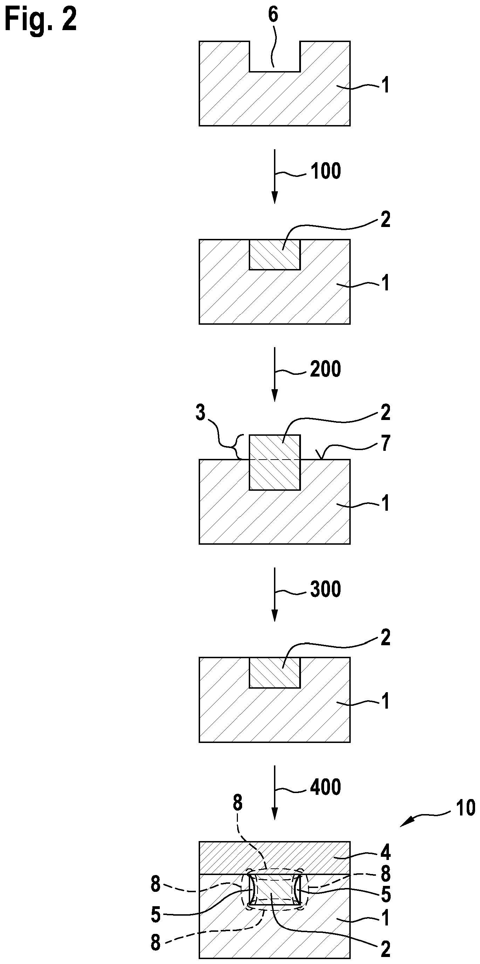

Figur 2 veranschaulicht ein Verfahrensschema eines Verfahrens gemäß einer zweiten Ausführungsform der Erfindung zur Herstellung eines Werkstoffverbundes aus mindestens einem ersten Werkstoff 2 und einem zweiten Werkstoff 1, wobei der erste Werkstoff 2 einen höheren thermischen Ausdehnungskoeffizient aufweist als der zweite Werkstoff 1. Die in Figur 2 dargestellten Bauteile sind im Schnitt dargestellt.

Zunächst wird ein zweiter Werkstoff 1 bereitgestellt, der eine quaderförmige Ausnehmung 6 umfasst. Der zweite Werkstoff 1 ist beispielsweise aus Stahl gebildet.

In einem ersten Verfahrensschritt 100 erfolgt das Einbringen eines in Form eines Einlegeteils ausgebildeten ersten Werkstoffs 2 in die Aussparung 6. Hierdurch kann zwischen dem ersten Werkstoff 2 und dem zweiten Werkstoff 1 eine formschlüssige Verbindung gebildet werden. Auch ist z.B. ein Verschrauben des Einlegeteils in der Aussparung 6 des zweiten Werkstoffs 1 möglich.

Sodann werden in Verfahrensschritt 200 der erste Werkstoff 2 und der zweite Werkstoff 1 aufgeheizt, und zwar auf eine Temperatur, die der im Verfahren anzuwendenden Maximaltemperatur entspricht. Hierdurch dehnt sich der erste Werkstoff 2 aus. Da das aus dem ersten Werkstoff 2 bestehende Einlegeteil allseitig von zweitem Werkstoff 1 umgeben ist, besteht für den ersten Werkstoff 2 lediglich die Möglichkeit, sich in Figur 2 nach oben, also aus der Aussparung 6 heraus, auszudehnen. Dies hat zur Folge, dass der erste Werkstoff 2 bei dieser Temperatur aus der Aussparung 6 um einen Abschnitt 3 hervorsteht, also die Oberfläche 7 des zweiten Werkstoffs 1 überragt.

In Verfahrensschritt 300 wird der über die Oberfläche 7 des zweiten Werkstoffs 1 hinausragende Abschnitt 3 des ersten Werkstoffs 2 abgetragen, so dass der erste Werkstoff 2 auf die gewünschte Bauteilgeometrie abgetragen wird.

In dem sich anschließenden Verfahrensschritt 400 wird weiterer zweiter Werkstoff 1 oder, wie hier gezeigt, ein dritter Werkstoff 4, dessen thermischer Volumenausdehnungskoeffizient geringer ist als der thermische Volumenausdehnungskoeffizient des ersten Werkstoffs 2, auf den Bereich des ersten Werkstoffs 2, von dem der Abschnitt 3 des ersten Werkstoffs 2 entfernt wurde, und zudem auf die Oberfläche 7 des zweiten Werkstoffs 1 aufgebracht. Damit bedeckt der dritte Werkstoff 4 die Oberfläche 7 des zweiten Werkstoffs 1 und den abgetragenen Bereich des ersten Werkstoffs 2. Der erste Werkstoff 2 ist damit allseitig von dem zweiten Werkstoff 1 und dem dritten Werkstoff 4 umgeben.

Nach dem Abkühlen kann es aufgrund von Volumenreduzierung dazu kommen, dass sich zwischen dem ersten Werkstoff 2 und dem zweiten Werkstoff 1 an den seitlichen Rändern der Aussparung 6 Hohlräume 5 durch seitliche Einschnürung des ersten Werkstoffs 2 bilden. Dies hat jedoch keinen Einfluss auf etwaige Zugspannungen im Verbindungsbereich 8 zwischen dem ersten Werkstoff 2 und dem zweiten Werkstoff 1 bzw. dritten Werkstoff 4.

Die stoffschlüssigen und insbesondere auch formschlüssigen Verbindungsbereiche 8 zeichnen sich durch eine hohe Stabilität ohne Rissbildung aus, so dass das entstehende Bauteil 10 dauerhaft stabil für vielfältige Zwecke eingesetzt werden kann.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: zweiter Werkstoff
- 2: erster Werkstoff
- 3: über die Oberfläche des zweiten Werkstoffs hinausragender Abschnitt des ersten Werkstoffs
- 4: dritter Werkstoff
- 5: Hohlraum
- 6: Aussparung
- 7: Oberfläche des zweiten Werkstoffs
- 8: Verbindungsbereich
- 10: Bauteil
- 100-400: Verfahrensschritte

## Patentansprüche

1. Verfahren zur Herstellung eines Werkstoffverbundes aus mindestens einem ersten Werkstoff (2) und einem zweiten Werkstoff (1), wobei der erste Werkstoff (2) einen höheren thermischen Ausdehnungskoeffizient aufweist als der zweite Werkstoff (1), umfassend die nachfolgenden Schritte:
• Aufheizen des ersten Werkstoffs (2) unter Volumenausdehnung des ersten Werkstoffs (2) auf eine Temperatur, die der im Verfahren anzuwendenden Maximaltemperatur entspricht,
• Abtragen, insbesondere Abfräsen des ersten Werkstoffs (2) auf die gewünschte Bauteilgeometrie und
• Verbinden des zweiten Werkstoffs (1) mit dem ersten Werkstoff (2).

2. Verfahren nach Anspruch 1, ferner umfassend vor dem Aufheizen des ersten Werkstoffs (2) einen Schritt des Aufbringens des ersten Werkstoffs (2) auf ein Substrat.

3. Verfahren nach Anspruch 1 oder 2, wobei der erste Werkstoff (2) mittels eines Spritzprozesses, insbesondere mittels Kaltgasspritzen, bereitgestellt wird.

4. Verfahren nach Anspruch 3, wobei der erste Werkstoff (2) auf das Substrat aufgespritzt wird und wobei das Substrat vor dem Aufspritzen des ersten Werkstoffs (2) auf eine Temperatur unterhalb der im Verfahren anzuwendenden Maximaltemperatur aufgeheizt wird.

5. Verfahren nach einem der vorhergehenden Ansprüche, wobei das Verbinden des zweiten Werkstoffs (1) mit dem ersten Werkstoff (2) durch Aufbringen des zweiten Werkstoffs (1) auf den ersten Werkstoff (2) mittels eines Spritzprozesses, insbesondere mittels Kaltgasspritzen, ausgeführt wird.

6. Verfahren nach Anspruch 1, wobei der erste Werkstoff (2) in Form eines Einlegeteils bereitgestellt und vor dem Abtragen des ersten Werkstoffs (2) oder nach dem Abtragen des ersten Werkstoffs (2) in eine Aussparung (6) im zweiten Werkstoff (1) eingebracht wird.

7. Verfahren nach Anspruch 6, wobei der in Form eines Einlegeteils vorliegende erste Werkstoff (2) vor dem Aufheizen in die Aussparung (6) im zweiten Werkstoff (1) eingebracht wird.

8. Verfahren nach Anspruch 6 oder 7, wobei der in Form eines Einlegeteils vorliegende erste Werkstoff (2) unter Bildung einer formschlüssigen Verbindung in die Aussparung (6) im zweiten Werkstoff (1) eingebracht wird.

9. Verfahren nach Anspruch 6 oder 7, wobei der in Form eines Einlegeteils vorliegende erste Werkstoff (2) in die Aussparung (6) im zweiten Werkstoff (1) eingeschraubt oder mittels einer Verdrehsicherung in der Aussparung (6) im zweiten Werkstoff (1) arretiert wird.

10. Verfahren nach Anspruch 1, wobei der erste Werkstoff (2) mittels eines Spritzprozesses, insbesondere mittels Kaltgasspritzen, in eine Aussparung (6) im zweiten Werkstoff (1) eingebracht wird.

11. Verfahren nach einem der Ansprüche 7 bis 10, wobei nach dem Aufheizen des ersten Werkstoffs (2) ein aus der Aussparung (6) herausstehender Abschnitt (3) des ersten Werkstoffs (2) abgetragen wird.

12. Verfahren nach Anspruch 11, ferner umfassend einen Schritt des Verbindens mindestens eines Bereichs des abgetragenen ersten Werkstoffs (2) mit weiterem zweitem Werkstoff (4) oder mit einem dritten Werkstoff, wobei der dritte Werkstoff einen niedrigeren thermischen Ausdehnungskoeffizient aufweist als der erste Werkstoff (2).

13. Verfahren nach einem der vorhergehenden Ansprüche, wobei der erste Werkstoff (2) Kupfer und der zweite Werkstoff (1) Stahl ist.

## Claims

1. Method for producing a material composite from at least a first material (2) and a second material (1), the first material (2) having a higher coefficient of thermal expansion than the second material (1), comprising the following steps:
• heating of the first material (2) with volume expansion of the first material (2) to a temperature, which corresponds to the maximum temperature to be used in the method,
• removing, in particular milling off, of the first material (2) to the desired component geometry and
• connecting the second material (1) to the first material (2).

2. The method of claim 1, further comprising a step of applying the first material (2) to a substrate before heating the first material (2).

3. Method according to claim 1 or 2, wherein the first material (2) is provided by means of a spraying process, in particular by means of cold gas spraying.

4. Method according to claim 3, wherein the first material (2) is sprayed onto the substrate and wherein the substrate is heated to a temperature below the maximum temperature to be used in the method before the spraying of the first material (2).

5. Method according to one of the preceding claims, wherein the connecting of the second material (1) to the first material (2) is carried out by applying the second material (1) to the first material (2) by means of a spraying process, in particular by means of cold gas spraying.

6. Method according to claim 1, wherein the first material (2) is provided in the form of an insert and is introduced into a recess (6) in the second material (1) before the removing of the first material (2) or after the removing of the first material (2).

7. Method according to claim 6, wherein the first material (2), which is in the form of an insert, is introduced into the recess (6) in the second material (1) before heating.

8. Method according to claim 6 or 7, wherein the first material (2), which is in the form of an insert, is introduced into the recess (6) in the second material (1) with the formation of a formfitting connection.

9. Method according to claim 6 or 7, wherein the first material (2) in the form of an insert is screwed into the recess (6) in the second material (1) or locked in the recess (6) in the second material (1) by means of an anti-twist protection .

10. Method according to claim 1, wherein the first material (2) is introduced into a recess (6) in the second material (1) by means of a spraying process, in particular by means of cold gas spraying.

11. Method according to one of claims 7 to 10, wherein, after the heating of the first material (2), a section (3) of the first material (2) protruding from the recess (6) is removed.

12. Method according to claim 11, further comprising a step of the connecting at least a portion of the removed first material (2) to another second material (4) or to a third material, wherein the third material has a lower coefficient of thermal expansion than the first material (2) .

13. Method according to one of the preceding claims, wherein the first material (2) is copper and the second material (1) is steel.

## Revendications

1. Procédé de fabrication d'un matériau composite à partir d'au moins un premier matériau (2) et d'un deuxième matériau (1), dans lequel le premier matériau (2) présente un coefficient de dilatation thermique supérieur à celui du deuxième matériau (1), comprenant les étapes suivantes :
- chauffage du premier matériau (2) par dilatation volumique du premier matériau (2) à une température qui correspond à la température maximale à appliquer dans le procédé,
- enlèvement, en particulier fraisage du premier matériau (2) à la géométrie de composant souhaitée et
- liaison du deuxième matériau (1) avec le premier matériau (2).

2. Procédé selon la revendication 1, comprenant de plus avant le chauffage du premier matériau (2), une étape d'application du premier matériau (2) sur un substrat.

3. Procédé selon la revendication 1 ou 2, dans lequel le premier matériau (2) est fourni au moyen d'un processus de projection, en particulier au moyen de la projection de gaz à froid.

4. Procédé selon la revendication 3, dans lequel le premier matériau (2) est projeté sur le substrat et dans lequel le substrat est chauffé avant la projection du premier matériau (2) à une température inférieure à la température maximale à appliquer dans le procédé.

5. Procédé selon l'une quelconque des revendications précédentes, dans lequel la liaison du deuxième matériau (1) avec le premier matériau (2) est réalisée par application du deuxième matériau (1) sur le premier matériau (2) au moyen d'un processus de projection, en particulier au moyen de la projection de gaz à froid.

6. Procédé selon la revendication 1, dans lequel le premier matériau (2) est fourni sous la forme d'une pièce d'insertion et est introduit avant l'enlèvement du premier matériau (2) ou après l'enlèvement du premier matériau (2) dans un évidement (6) dans le deuxième matériau (1).

7. Procédé selon la revendication 6, dans lequel le premier matériau (2) se présentant sous la forme d'une pièce d'insertion est introduit avant le chauffage dans l'évidement (6) dans le deuxième matériau (1).

8. Procédé selon la revendication 6 ou 7, dans lequel le premier matériau (2) se présentant sous la forme d'une pièce d'insertion est introduit en formant une liaison par complémentarité de formes dans l'évidement (6) dans le deuxième matériau (1).

9. Procédé selon la revendication 6 ou 7, dans lequel le premier matériau (2) se présentant sous la forme d'une pièce d'insertion est vissé dans l'évidement (6) dans le deuxième matériau (1) ou est arrêté au moyen d'un dispositif antirotation dans l'évidement (6) dans le deuxième matériau (1).

10. Procédé selon la revendication 1, dans lequel le premier matériau (2) est introduit au moyen d'un processus de projection, en particulier au moyen de la projection de gaz à froid, dans un évidement (6) dans le deuxième matériau (1).

11. Procédé selon l'une quelconque des revendications 7 à 10, dans lequel une section (3) sortant de l'évidement (6) du premier matériau (2) est enlevée après le chauffage du premier matériau (2).

12. Procédé selon la revendication 11, comprenant de plus une étape de liaison au moins d'une zone du premier matériau (2) enlevé avec un autre deuxième matériau (4) ou avec un troisième matériau, dans lequel le troisième matériau présente un coefficient de dilatation thermique plus faible que celui du premier matériau (2).

13. Procédé selon l'une quelconque des revendications précédentes, dans lequel le premier matériau (2) est du cuivre et le deuxième matériau (1) est de l'acier.
